(19) **Europäisches Patentamt / European Patent Office / Office européen des brevets**

(11) **EP 3 940 430 A1**

(12) # EUROPEAN PATENT APPLICATION
published in accordance with Art. 153(4) EPC

(43) Date of publication:
**19.01.2022 Bulletin 2022/03**

(21) Application number: **20771020.3**

(22) Date of filing: **13.03.2020**

(51) Int Cl.:
**G01T 1/24** $^{(2006.01)}$

(86) International application number:
**PCT/ES2020/070181**

(87) International publication number:
**WO 2020/183052 (17.09.2020 Gazette 2020/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.03.2019 ES 201930239**

(71) Applicants:
• **Consejo Superior De Investigaciones Científicas (CSIC)**
  **28006 Madrid (ES)**
• **Universitat Politécnica de Valencia**
  **46022 Valencia (ES)**

(72) Inventors:
• **BENLLOCH BAVIERA, José María**
  **28006 Madrid (ES)**
• **GIMÉNEZ ALVENTOSA, Vicent**
  **46022 Valencia (ES)**
• **GONZÁLEZ MARTÍNEZ, Antonio Javier**
  **28006 Madrid (ES)**
• **ILISIE, Victor**
  **28006 Madrid (ES)**
• **SÁNCHEZ MARTÍNEZ, Filomeno**
  **28006 Madrid (ES) (ES)**

(74) Representative: **Tribalyte Ideas**
  **Gta. Quevedo 8, 6°2**
  **28015 Madrid (ES)**

(54) **METHOD AND DEVICE FOR DETECTING GAMMA RAYS WITH ABILITY TO DETERMINE MULTIPLE INTERACTIONS AND THEIR CORRESPONDING TIME SEQUENCE**

(57)     The present invention relates to a method for the detection of gamma rays with the capacity to determine multiple interactions and the corresponding time sequence thereof, comprising the use of a device comprising: one or more detection means for detecting the energy load $q_i$ deposited on the coordinates (x, y, z) of a detecting element and the time instant $t_i$ corresponding to the detection of said deposition; electronic data reading and acquisition means connected to the detection means of the device, said electronic means being configured for capturing, digitizing, and transmitting the detection signals of the device; and at least one processing unit connected to the electronic means, configured with software and/or hardware means for recording and/or processing data generated by the electronic data reading and acquisition means.

**FIG. 1**

**Description**

**FIELD OF THE INVENTION**

The present invention is comprised in the field of imaging by means of gamma rays. More specifically, the invention relates to the design of devices capable of detecting gamma radiation and obtaining information about same, such as medical devices used in nuclear imaging, such as positron emission tomography (PET) equipment, for example, both for diagnostic medical purposes and for dose control during radiation processes, as well as gamma ray telescopes for astrophysics (for example, telescopes Compton) or other technical applications, such as control processes in the dismantling of nuclear power plants and/or national security applications.

**BACKGROUND OF THE INVENTION**

Compton cameras are widely used today, for example in the field of astronomy, astrophysics, or nuclear medicine. Nevertheless, although said cameras can have very high energy resolution, they present an important limitation in terms of temporal resolution of the detected events. This means that it is not possible in these systems to precisely determine the time sequence of different scattering events of the gamma rays entering the mentioned cameras. Another important aspect to be taken into account is the fact that known detection devices are based on multilayer configurations or on pixelated block detectors, but none of them contemplates the possibility of using detectors formed by compact monolithic blocks, with the capacity to recognize several Compton interactions, reconstructing their impact coordinates, energies, and time sequences.

One proposal to improve known systems in this sense is described in patent application WO 2016/185123 A1. However, the reconstruction method disclosed in said document is, in practice, hard to experimentally implement. This is because the mentioned method is essentially based on applying a series of geometric approximations that are hard to generalize for an arbitrary detector. Therefore, the described method only works in very specific types of detectors, and with a limited resolution.

Additionally, there are also other methods for the temporal reconstruction of events in gamma detectors based on the calculation of the time-of-flight thereof, such as for example the method described in patent application WO 2017/077164 A1. To that end, the detectors that implement said method are configured to measure three-dimensional interaction positions in the detector and the energy deposited in said positions. Nevertheless, these methods have the limitation that in order to be able to calculate the time-of-flight of gamma rays, the detectors used must necessarily have a layered structure, which represents an added complexity to the detector, involving increased manufacturing times and costs, as well as a higher risk of the loss of precision.

In light of the above-mentioned limitations of the state of the art, it is necessary to develop in the present technical field new methods for the detection of gamma rays which allow resolving in a temporal manner the interaction events associated with same and which, at the same time, can be used in any detector structure, therefore not being restricted to detectors with layered structures. The present invention proposes a solution to said need by means of a novel method for the detection of gamma rays with the capacity to determine multiple interactions and the corresponding time sequence thereof, and a gamma ray detection device implementing said method.

**BRIEF DESCRIPTION OF THE INVENTION**

As described in the preceding paragraphs, a first object of the invention relates to a method for the detection of gamma rays with the capacity to determine multiple interactions and the corresponding time sequence thereof, comprising the use of a device in turn comprising:

- one or more detection means for detecting the energy load $q_i$ deposited on the coordinates (x, y, z) of a detecting element and the time instant $t_i$ corresponding to the detection of said deposition;
- electronic data reading and acquisition means connected to the detection means of the device, said electronic means being configured for capturing, digitizing, and transmitting the detection signals of the device; and
- at least one processing unit connected to the electronic means, configured with software and/or hardware means for recording and/or processing data generated by the electronic data reading and acquisition means.

Advantageously, the method of detection of the invention preferably comprises performing the following steps:

- calculating the center of mass of the values of the deposited loads $q_i$ and/or of the loads divided by their timestamp, $q_i/t_i$, with respect to the coordinates (x, y, z) of the detecting element;
- calculating the inertia tensor $I^{CM}_{\alpha\beta}$ with respect to the center of mass of the load;

- diagonalizing the matrix corresponding to the inertia tensor in order to extract its eigenvectors, determining the axes of symmetry of said matrix;
- projecting the detected values of the load $q_i$ (or $q_i/t_i$) onto the axes defined by the eigenvectors;
- alternatively, distributions $q_i^M / t_i^N$ , where M and N are two natural numbers representing the power to which the value of the load and the value of the timestamp is raised, can be used to make the peak of the distribution more noticeable;
- determining the number of interactions experienced by each gamma ray in the detection device, and the corresponding coordinates (x, y, z) and times $t_i$ thereof from the projection of the loads $q_i$ (or $q_i/t_i$) calculated in the preceding step, identifying an interaction with a maximum in the function of said projection represented on each axis corresponding to each eigenvector.

In a preferred embodiment of the invention, the projection of the loads $q_i$ is fitted numerically to a mathematical function, the coordinates (x, y, z) and/or the corresponding deposited energy being estimated from the properties of said function. More preferably, the mathematical function is a Gaussian distribution.

In another preferred embodiment of the invention, the method of detection further comprises the determination of the depth of interaction (DOI) of the gamma rays from the scattering of the distribution of the energy load $q_i$ in the obtained projections on the eigenvector axes.

In another preferred embodiment of the invention, once the number of interactions experienced by each gamma ray has been determined, the time sequence thereof is established from the coordinates (x, y, z) of said interactions, from the detection times $t_i$, and from the determination of the speed of the gamma rays and/or of the optical photons propagated in the detecting element, obtained from the speed of light in a vacuum $c$ and from the refractive index $n$ of said detecting element.

A second object of the present invention relates to a gamma ray detection device preferably comprising:

- one or more detection means for detecting the energy load $q_i$ deposited on the coordinates (x, y, z) of a detecting element and the time instant $t_i$ corresponding to the detection of said deposition;
- electronic data reading and acquisition means connected to the detection means of the device, said electronic means being configured for capturing, digitizing, and transmitting the detection signals of the device; and
- at least one processing unit connected to the electronic means.

Advantageously, the processing unit of the device comprises software and/or hardware means for recording and/or processing data generated by the electronic data reading and acquisition means configured for performing a method according to any of the embodiments described herein.

In a preferred embodiment of the invention, the gamma ray detecting element comprises one or more pixelated or monolithic scintillators, one or more solid-state detectors, or one or more Cherenkov radiation detectors, alone or in combination with one another.

More preferably, the solid-state detecting element comprises If, Ge, CdTe, GaAs, $PbI_2$, $HgI_2$, CZT, or HgCdTe semiconductors, and/or the Cherenkov detectors comprise $PbF_2$, NaBi $(WO_4)_2$, PbWO4, $MgF_2$, $C_6F_{14}$, $C_4F_{10}$, or silica aerogel.

More preferably, the scintillator elements comprise organic or inorganic crystal scintillators, liquid scintillators, and/or gaseous scintillators. And even more preferably:

- the organic crystal scintillators comprise anthracene, stilbene, and/or naphthalene;
- the inorganic crystal scintillators comprise cesium iodide (CsI), thallium doped cesium iodide (CsI (Tl)), bismuth germanate (BGO), thallium doped sodium iodide (NaI (Tl)), fluoride of barium ($BaF_2$), europium doped calcium fluoride ($CaF_2(Eu)$), cadmium tungstate ($CdWO_4$), cerium doped lanthanum bromide (LaBr3(Ce)), cerium doped lutetium-yttrium silicates (LuYSiOs(Ce)(YAG (Ce)), silver doped zinc sulfide (ZnS(Ag)), or cerium doped yttrium-aluminum garnet (III) $Y_3Al_5O_{12}$ (Ce), LYSO, CsF, KI(Tl), $CaF_2$(Eu), $Gd_2SiO_5$[Ce] (GSO), and/or LSO;
- the liquid scintillators comprise p-terphenyl ($C_{18}H_{14}$), 2-(4-biphenylyl)-5-phenyl-1,3,4-oxadiazole PBD ($C_{20}H_{14}N_{2O}$), butyl PBD ($C_{24}H_{22}N_{2O}$), PPO ($C_{15}H_{11}NO$), dissolved in solvents such as toluene, xylene, benzene, phenylcyclohexane, triethylbenzene, or decalin; and
- the gaseous scintillators comprise nitrogen, helium, argon, krypton, and/or xenon.

In another preferred embodiment of the invention, the detecting element comprises one or more photodetectors. More preferably, said photosensors comprise matrices of silicon photomultipliers (SiPMs), single-photon avalanche diodes (SPAD), digital SiPMs, avalanche photodiodes, position-sensitive photomultipliers, photomultipliers, phototransistors, photodiodes, photo-ICs, or combinations thereof.

In another preferred embodiment of the invention, the gamma ray detecting element is coupled to one or more optically reflective surfaces, said surfaces being polished or rough, specular, diffuse, retro-reflective, or a combination thereof.

A third object of the invention relates to the use of a method or of a device according to any of the embodiments described herein, in nuclear imaging medical equipment and/or in a gamma ray telescope.

A list of definitions of some of the terms used in the present description is furthermore provided below:

- Interaction cloud: relates to an accumulation of any type of interactions of particles (photoelectric, Compton, Bremsstrahlung, Cherenkov, etc.) having at least one mensurable magnitude, such as deposited energy, instantaneous time, electrical charge, etc. This "interaction cloud" is formed by one or more interactions that are spatially and/or temporally close enough to be experimentally indistinguishable.

- Spatial information: relates to any type of data that is a function of the N ($N \leq 3$) spatial dimension, whether said dimensions are discrete or continuous, and of the coordinates (x, y, z) thereof.

- Sensitive material: relates to any physical material interacting with radiation, producing a measurable physical magnitude.

- Detector: relates to any device with the capacity to record a certain physical magnitude (such as spatial and/or temporal information and/or any other physical magnitude) corresponding to one or more interaction clouds. Spatial information can be obtained, for example, by means of processing the distribution of energy deposition and/or of the distribution of the timestamp and/or the distribution of the electrical load, etc. These detectors can be formed by one or more sensitive materials, one or more acquisition devices, and readout electronics extracting signals from the detector. The terms "particle detector", "detector", "detector module", and "detection module" will be used as synonyms in the present description.

- Event: this is defined as the total number of interactions that a single incident gamma ray and its secondary particles cause, until the initial energy thereof is completely or partially lost (being deposited, absorbed, etc.).

- The terms "light reflective surface" and "optical reflective surface" are considered as synonyms in the present description.

- Time order, time sequence: these are expressions used interchangeably and refer to the knowledge of information $t' > t$ for example, where $t$ and $t'$ are two time instants (or timestamps), with the values thereof being known or unknown.

- Acquisition device: relates to a device used to extract one or more signals generated in a detector, or in one or more sensitive materials.

- Load (energy): relates to the energy deposited in an acquisition device. In the present description, the symbol $q_i$ is used to denote the energy deposited in a region of the acquisition device, such as for example in a given pixel of a photodetector.

- Timestamp: relates to the time information recorded by the acquisition device, corresponding to an interaction. The symbol $t_i$ will be used to denote said timestamp.

- Detection device: relates to a set of detectors, which may or may not be independent, having an identical structure or not, working together.

- Data matrix: relates to the information extracted from the readout of one or more acquisition devices of one or more detectors. This information can be relative to any type of measurable physical magnitude, such as energy, electrical load, timestamp, etc. The readouts can be processed to combine the acquired data in a single matrix or more than one matrix. A data matrix can be a one-dimensional matrix or higher, in any coordinate system.

## DESCRIPTION OF THE DRAWINGS

The preceding and other features and advantages will be better understood from the detailed description of the invention, as well as from the preferred embodiments referring to the attached drawings, in which:

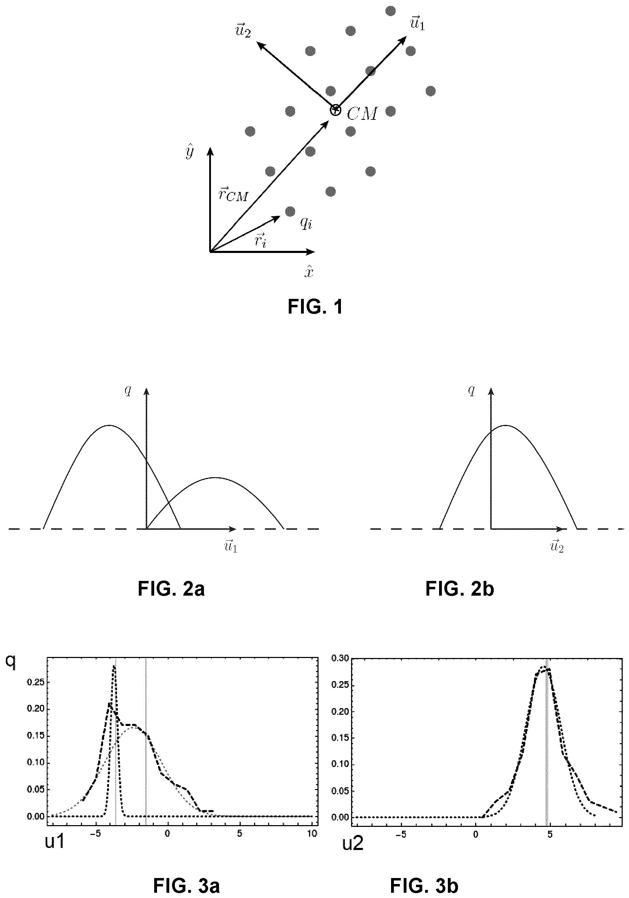

Figure 1 shows the center of mass of a discrete distribution of loads (energies) with respect to an arbitrary orthogonal reference framework (x, y) and the eigenvectors ($u_1$, $u_2$) of the inertia tensor $I^{CM}_{\alpha\beta}$ (with respect to the center of mass of the load).

Figures 2a-2b show the summed and grouped projections of the discrete distribution of the load on the eigenvectors ($u_1$, $u_2$) of the inertia tensor $I^{CM}_{\alpha\beta}$, respectively.

Figures 3a-3b show the summed and grouped projections of the discrete distribution of load on the eigenvectors ($u_1$, $u_2$) of the inertia tensor $I^{CM}_{\alpha\beta}$, respectively, for a simulated case (curves drawn with a long dash). Curves with a dotted line correspond to Gaussian fit curves.

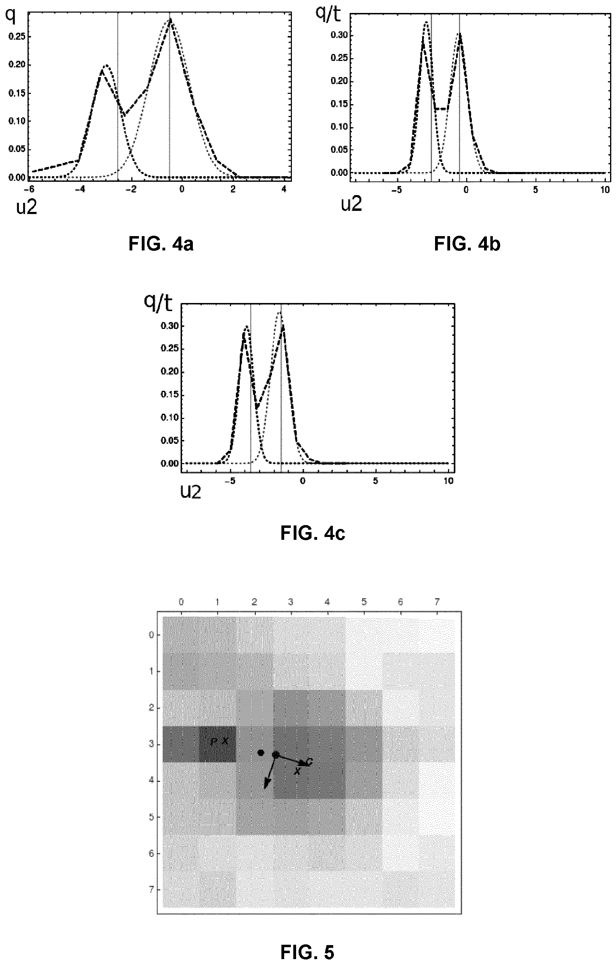

Figures 4a-4c show the summed and grouped projections of the distribution $q_i/t_i$ on the eigenvectors of the inertia tensor $I^{CM,q/t}_{\alpha\beta}$ (with respect to the center of mass of the distribution $q_i/t_i$) (Figure 4a), the summed and grouped projections of the distribution $q_i$ on one of the eigenvectors of the inertia tensor $I^{CM,q/t}_{\alpha\beta}$ (Figure 4b), and the summed and grouped projections of the distribution $q_i/t_i$ on one of the eigenvectors of the inertia tensor of the load $I^{CM}_{\alpha\beta}$ (Figure 4c), for a simulated case (line drawn with a long dash). The dotted lines correspond to Gaussian fit curves.

Figure 5 shows the simulated distribution of the load (energy) for a Philips digital SiPM photodetector (with an energy readout of 8x8 and timestamp readout of 4×4) for an incident gamma ray experiencing a Compton interaction and a photoelectric interaction (referred to as C and P, respectively). The black arrows are the eigenvectors of the inertia tensor $I^{CM}_{\alpha\beta}$ with respect to the center of mass of the load, the circled cross is the center of mass of the load, and the black circle is the center of mass of the distribution $q_i/t_i$. The marks "X" correspond to the coordinates of the two interactions reconstructed with the method of the present invention.

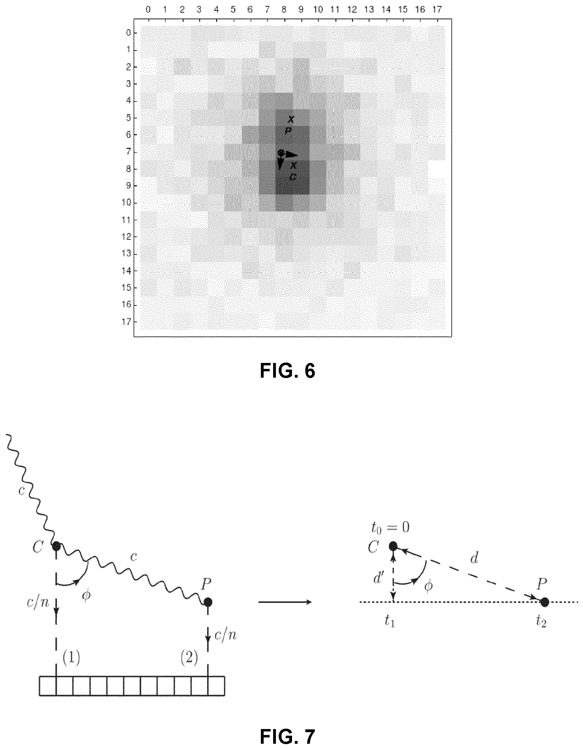

Figure 6 shows the simulated distribution of load (energy) for a possible digital SiPM photodetector (with a readout of 18×18 both in energy and timestamp) for an incident gamma ray experiencing a Compton interaction and a photoelectric interaction (referred to as C and P). The black arrows are the eigenvectors of the inertia tensor $I^{CM}_{\alpha\beta}$ with respect to the center of mass of the load, the circled cross is the center of mass of the load, and the black circle (which in this case overlaps the circled cross) is the center of mass of the distribution $q_i/t_i$. The marks "X" correspond to the coordinates of the two interactions reconstructed with the method of the present invention.

Figure 7 shows a representation of the fastest scintillation optical photons (1, 2) travelling at the speed *c/n,* where c is the speed of light in a vacuum and *n* is the refractive index of the material of the detector. Depending on the angle $\varphi$, photon (1) or, in contrast, photon (2) will reach the photodetector first, as explained in the detailed description of the invention.

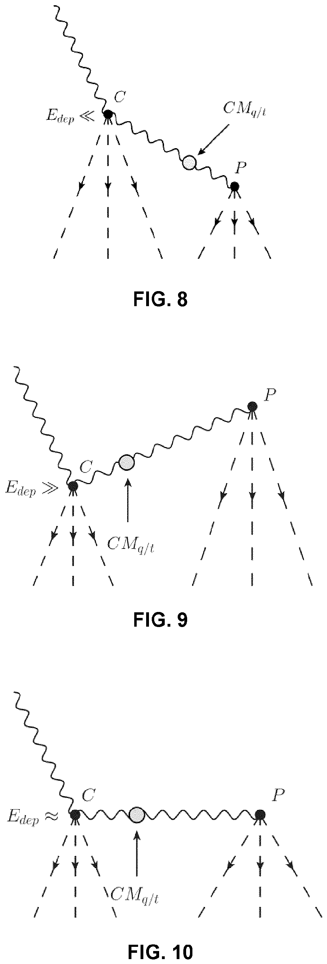

Figure 8 shows the most likely configuration (forward scatter) for the case of multiple scatter of incident gamma rays. Using the formula for the Compton angle, the deposited energy in the first Compton interaction is small compared with the incident energy. Since the fastest beam of optical photons (which reach the photodetector first) is located below the final interaction (which is due to the photoelectric effect in the example of the figure), the center of mass of the distribution $q_i/t_i$ will be closer to the last interaction.

Figure 9 shows the most unlikely configuration (backscatter) for the multiple scatter of incident gamma rays. Using the formula for the Compton angle, the deposited energy in the first Compton interaction represents a high fraction of incident energy. Since the fastest beam of optical photons is located below the first interaction (which is a Compton scattering in the example of the figure), the center of mass of the distribution $q_i/t_i$ will be closer to the first interaction.

Figure 10 shows a likely configuration for the case of multiple scatter of an incident gamma ray where the depths of interaction are similar. Since the deposited energies are also similar, the center of mass of the distribution $q_i/t_i$ will be closer to the first interaction, like in the case of Figure 9.

## DETAILED DESCRIPTION OF THE INVENTION

A detailed description of the invention in reference to the different preferred embodiments thereof is described below based on Figures 1-10 herein. Said description is provided for the purposes of illustrating but not limiting the claimed invention.

As described in preceding sections, the present invention relates to a gamma ray detection device (suitable for use, for example, in PET or Compton cameras) comprising one or more pixelated, monolithic, or layered detectors.

In said detectors, the incident gamma rays can scatter inside same (Compton scattering) and/or be absorbed by the photoelectric effect. Both Compton scattering and the photoelectric effect, in the case of scintillators, produce scintillation photons (optical photons), typically in the order of thousands per MeV, which are evenly distributed in an isotropic manner in a solid angle of $4\Pi$ steradians (spherical distribution). In this context, the pixelated photodetectors of the device of the invention are configured for providing the electronic readout of the information relative to scintillated optical photons scintillated, said information including, essentially, at least the energy deposited in each pixel (said energy referred to as "load") and the time instant (or "timestamp") in which scintillation events take place. By combining the mentioned information about the deposited energy (load) and the timestamp information in each pixel, the detectors of the device of the invention can precisely determine the coordinates of multiple Compton and/or photoelectric effect interactions. Moreover, by using the load distribution, the detectors can also calculate the depth of interaction (or DOI) of each gamma ray, as well as estimate its energy deposited in each impact. This combined information can be used to obtain improved PET and Compton cameras with respect to the systems known in the state of the art.

As described in preceding sections, and as a result of the described pixelated photodetectors (capable of obtaining information about the load and the timestamp of each interaction event for each gamma ray), a first object of the present invention relates to a method for the detection of gamma rays with the capacity to determine multiple interaction clouds and the corresponding time sequence thereof. In said method, for one incident gamma ray, the output of the electronic readout of the pixelated detector is preferably presented as two data matrices, where one of said matrices contains information about the energy (load) deposited in each pixel, and the other one contains information about the timestamp for each interaction and pixel.

As mentioned, each element of the load matrix corresponds to the energy deposited by the optical photons in the corresponding pixel thereof. Since optical photons can be considered monoenergetic, the total energy corresponding to one pixel will be determined by the number of photons detected for each pixel. Moreover, the matrix containing the timestamps will contain information about the instant of detection of the first optical photon detected in a pixel or a group of pixels. Therefore, the information generated by each pixelated detector can be considered a discrete load distribution, together with a timestamp distribution, both being two-dimensional (in the pixel map). Therefore, the vector coordinates of the center of mass of the load $r_{CM}$ of a distribution of loads $q_i$ (with $i$=1,...,N) are determined by the following expression:

$$\vec{r}_{CM} = \sum_i \frac{\vec{r}_i \cdot q_i}{q} \quad , \qquad\qquad \text{(Eq. 1)}$$

where $q$ is the load total $q = \sum_i q_i$ and $\vec{r} = (x, y)$. Once the expression of the center of mass has been obtained, it is possible to calculate the components of the inertia tensor $I^{CM}_{\alpha\beta}$ (which is a matrix having a 2×2 dimension) having a discrete distribution with respect to said center of mass:

$$I^{CM}_{\alpha\beta} = \sum_i q_i \left( \delta_{\alpha\beta} \sum_{\gamma=1}^{2} x'^2_{\gamma,i} - x'_{\alpha,i} x'_{\beta,i} \right) \quad , \qquad\qquad \text{(Eq. 2)}$$

where $\alpha,\beta$=(1,2), $x'_{\alpha,i}$ is the coordinate $x'_\alpha$ of the load $q_i$ (with respect to a reference system with an origin at the center of mass) and $x'_1=x'$ and $x'_2=y'$. By diagonalizing the preceding matrix, the corresponding eigenvalues and eigenvectors thereof are obtained. The eigenvectors of the inertia tensor, $u_1$ and $u_2$, are orthogonal and shown schematically in Figure 1. If the load distribution of the scintillation photons has a certain degree of symmetry (which usually occurs), then the projection of the load for a gamma ray experiencing scattering and possibly the photoelectric effect, onto the axes defined by the eigenvectors will be similar to that schematically depicted in Figures 2a-2b. Therefore, from this projection it is possible to identify the number of interactions (interaction clouds) and reconstruct the two-dimensional (2D) coordinates thereof.

Nevertheless, based on the events to be detected, in a real case it is possible to obtain projections of lower quality, where a fitting of the readout results obtained needs to be performed. An example of said type of fitting is shown in Figures 3a-3b for a numerical simulation, where the discontinuous lines drawn with a longer dash correspond to the collected load distribution, projected onto the axes designated by the eigenvectors, the vertical lines are the real coordinates of the interactions and the dotted lines (finer line) correspond to the numerical fitting to Gaussian distributions:

$$G(x) = \frac{A}{\sigma\sqrt{2\pi}} e^{-\frac{(x-\mu)^2}{2\sigma^2}}$$ , (Eq. 3)

where $A$ is a convergence constant of the fittings, $\mu$ is the mean value of the fitting, and $\sigma$ is the standard deviation of the distribution. From the mean value $\mu$, the 2D coordinates of the interactions can be estimated, and the constant $A$ can be used to extract the energy deposited for each interaction (impact).

The previous fittings can be even further improved using the timestamp information. In a possible embodiment of the method of the invention, instead of using only the timestamps of the fastest photons, it is possible to use in their place the complete distribution thereof, for example by means of a parameter corresponding to the quotient of the load divided by time, $q_i/t_i$, where $q_i$ is the load deposited in a pixel $i$, and $t_i$ is the timestamp corresponding to said pixel. This allows the load distribution in the regions where the optical photons first reach the detector to be expressly contemplated. Therefore, in this embodiment the preceding steps are carried out (using the Equations 1-3) by making the following substitution:

$$q_i \quad \rightarrow \quad \frac{q_i}{t_i}.$$ (Eq. 4)

The origin of times (corresponding to the lowest timestamp) cannot be established at the zero value in this case, although it is possible to establish a constant having an infinitesimal value $\varepsilon$ which his added to all the timestamps $t_i$. Having calculated the vector of the center of mass $r^{q/t}_{CM}$ of the distribution $q_i/t_i$ and also the inertia tensor $I^{CM,q/t}_{\alpha\beta}$ and the eigenvectors thereof, it is possible to calculate the load distribution divided by the timestamp on the axes defined by these eigenvectors. This allows an improved profile of the interaction clouds to be obtained, as shown by way of example in Figure 4a. The load distribution on the eigenvectors of $q/t$, or vice versa, can also be projected (Figures 4b-4c, respectively). With a statistical verification test, for example by means of a $\chi^2$ test, it is possible to choose the best fits and use them to estimate the 2D coordinates (x, y) of the interactions of the incident gamma ray. An example of said result is shown in Figure 5 for a Philips digital silicon photomultiplier detector (with a size of $32\times32$ mm$^2$), with an energy readout of $8\times8$ and $4\times4$ independent timestamps. In the mentioned in the figure, C and P represent real Compton and photoelectric interactions, the circled cross represents the center of mass, and the two orthogonal arrows are the eigenvectors of $I^{CM}_{\alpha\beta}$. The black circle represents the center of mass $q/t$. The marks "X" represent the reconstructed coordinates of the interaction points by means of using the method described above.

The use of smaller pixels improves both tanto the estimation of energy and the reconfiguration structure of 2D coordinates. In this sense, in the example shown in Figure 6, where the electronic readout for a detector of the same size ($32\times32$ mm$^2$), but with an energy readout of $18\times18$ and $18\times18$ independent timestamps, has been simulated. The figure shows the interactions of real and reconstructed gamma rays, and also the center of mass and the eigenvectors of $I^{CM}_{\alpha\beta}$ like in the previous Figure 5.

The load (energy) deposited for each Compton/photoelectric interaction can be estimated from the numerical fits (i.e., like in Equation 3) or from the distribution of energy in the vicinity of the reconstructed coordinates, corresponding to the interaction points of the gamma rays. The depth of interaction (DOI) can also be estimated in a similar manner, using the information about the width (scattering) of the energy distribution. Another method can consist of using the readout of an additional lateral and/or upper photodetector, or both. This option improves both the estimation of the DOI and the estimation of the load and can also even further improve the reconstruction of the coordinates (x, y).

Having estimated the DOI, the remaining task is the recognition of the time sequence of the interactions. Here, again, the distinction must be made between the first interaction of the gamma rays and the interaction of the scintillated optical photons of which reach the photodetector first. Ideally, a limiting angle $\varphi_l$ (which only depends on the refractive index $n$ as will be shown below) helps to precisely distinguish between the different possible cases. By way of example, (Figure 7) is considered the interaction of an incident gamma ray experiencing a Compton scattering and a photoelectric interaction. The fastest optical photons (which reach the pixelated photodetector first, indicated as (1, 2) in the figure) generated by these interactions are the ones travelling in a straight line towards the photodetector, orthogonally thereto, as shown in Figure 7 (left), with speed $c/n$ (where $c$ is the speed of light in a vacuum and $n$ is the refractive index). Since the incident gamma ray is a high-energy photon, it travels at speed $c$, and the Compton scattered gamma ray will also travel at the same speed $c$. Therefore, out of the optical photons (1, 2), the photon that will be detected first will depend on which one, between the scattered gamma ray travelling at speed $c$, and the optical photon (1) travelling at $c/n$, reaches the dotted line shown in Figure 7 first. Said line is the line parallel to the photodetector which crosses the point where the photoelectric effect, which is the source of the optical photon (2), takes place. From this line, both photon (1) and photon (2) travel the same distance at the same speed. As depicted in the triangle of Figure 7 (right), the following is obtained:

$$d = ct_2, \qquad d' = \frac{c}{n}t_1 = d\cos\phi \qquad \Rightarrow \qquad \frac{t_1}{t_2} = n\cos\phi \qquad \text{(Eq. 7)}$$

The conclusion is, therefore, that

$$t_1 < t_2 \quad \text{if and only if} \quad \phi > \arccos\frac{1}{n} . \qquad \text{(Eq. 8)}$$

It is therefore possible to define a limiting angle $\varphi_l$ = arccos(1/$n$) and, therefore, if $\varphi < \varphi_l$ optical photon (2) reaches the photodetector first, and if $\varphi > \varphi_l$ optical photon (1) reaches the photodetector first. By way of example, for a LYSO scintillation crystal, where $n \simeq 1.8$, the limiting angle is $\varphi_l \simeq 57°$. It is important to take into account that the fastest optical photon can experience scattering, absorption, or even reach the photodetector without being detected. Therefore, instead of relying on the timestamp of a single optical photon (or just a few optical photons), it is also possible to consider the entire distribution $q_i/t_i$, as is done below.

By way of example, three possible cases of interest, as shown in Figures 8, 9, and 10, will be illustrated. Given that in Compton scattering at 511 keV mostly forward scatter takes place, the first case (Figure 8) represents the most likely case of interaction. From the Compton equation:

$$\cos\theta = 1 - m_e c^2 \left( \frac{1}{E'_\gamma} - \frac{1}{E_\gamma} \right), \qquad \text{(Eq. 9)}$$

(where $E_\gamma$ and $E'_\gamma$ are the energy of the incident and scattered gamma ray, respectively, and $m_e$ is the mass of the electron), it is deduced that in the case of forward scatter, the deposited energy ($E_{dep} = E_\gamma - E'_\gamma$) in the first Compton interaction is small ($E_{dep}$ «) compared with the total energy. Therefore, the amount of deposited energy will be greater for the final photoelectric absorption. Since angle $\phi$ is small, the fastest group of optical photons of the second interaction will reach the photodetector before the photons of the first interaction. To eliminate possible statistical fluctuations, the center of mass of the distribution $q_i/t_i$ will be used as an estimator. In the case shown in Figure 8, the center of mass $q/t$ is displaced closer to the last interaction.

For the second configuration (Figure 9), the opposite case in which the gamma ray deposits a large amount of energy in the first Compton interaction ($E_{dep}$ ») and is back scattered is analyzed. The result of the reconstruction of the detector of the two interactions is indistinguishable from the first. The output of the detector would be two interactions, one with a high deposition of energy and another one with a low deposition of energy and different DOI. Furthermore, in this case the center of mass $q/t$ is displaced closer to the first interaction.

For the third case (Figure 10) where the energy deposited in the first Compton interaction presents an intermediate value (denoted as $E \approx$) and the heights are similar, the center of mass $q/t$ is closer to the first interaction. This is due, in general terms, to the fact that the angle $\phi \sim 90° \gg \varphi_l$.

Although only two interactions take place in the cases described above, the method of the invention can be extended to an arbitrary number of interactions.

In summary, the present invention is essentially characterized by the fact that the gamma ray detection device is configured for spatially distinguishing between different interaction clouds, deducing the time sequence and also the corresponding fraction of deposited energy (with respect to the total deposited energy of an event) thereof, using any type of recorded spatial information and/or time information and/or of energy information. For example, for a scintillating crystal, the detector will preferably use the distribution of deposited energy, or information about the distributions of energy and timestamp and/or distribution $q^M_i/t^N_i$, to obtain the necessary spatial information, the deposited energy for each interaction cloud and the time sequence thereof. The present description uses $q_i$ as the load and $t_i$ as the timestamp information of a pixel $i$ (of a pixelated photodetector) and $M, N$ as two real numbers, representing arbitrary powers to which said values can be raised to make the corresponding distributions have a more defined peak.

The spatial information can be, for example, the distribution of the number of optical photons produced by a scintillation crystal, the distribution of the electrical load produced in a semiconductor detector, Cherenkov radiation detection, etc. It is important to highlight that without the timestamp information, the detector can even spatially distinguish between different interaction clouds but cannot establish the time sequence thereof. In view of this fact, the most important feature of the detector of the present invention is the fact that it is capable of performing such measurement with monolithic block detectors coupled to pixelated photosensors.

In a second object of the invention, the gamma ray detection device described herein preferably comprises one or more detectors, whether independent or not, where said detectors can be grouped in any type of structure, such as an independent multilayer format, forming a detector ring, etc. Likewise, the detectors are preferably equipped with data readout and acquisition electronics, configured for capturing, digitizing, and sending the detection signals to a processing unit for subsequent analysis. Said unit will be configured with software and/or hardware means for carrying out the method of detection of the invention, in any of its preferred embodiments, as described in the preceding sections.

The acquisition devices of the detectors can be coupled to sensitive materials, using any type of technology or material known and used in the state of the art, such as optical grease, for example. It can also be coupled without any type of intermediate material.

The sensitive material of the device for detection can be any material producing a mensurable physical magnitude when the radiation interacts with said material. Some examples are scintillating, monolithic, or pixelated crystals, semiconductors such as Si, Ge, CdTe, GaAs, PbI2, HgI2, CZT, etc. for solid-state detectors, xenon for scintillation and Cherenkov radiation detectors, etc. Furthermore, the sensitive materials can be encapsulated or exposed, coupled to an optical reflective surface and/or using any known technique to improve the quality of the collected data. The optical reflective surfaces can be polished or rough, specular, diffuse, retro-reflective, or a combination thereof. Likewise, one or more detection assemblies can comprise an optically painted surface.

In a detection system according to the invention, each detector device can be adjacent to another one forming a given assembly, and said assembly can be organized with respect to the other one, for example forming a closed or open structure. The components of a detector system can be identical or different, depending on their specific design conditions.

Each detector in the device can have an arbitrary shape and can measure any physical magnitude which provides spatial and/or temporal information about at least one interaction cloud of one or more sensitive materials. Examples of such detection elements are solid-state detectors, scintillation detectors, etc.

Examples of solid-state detectors are semiconductors such as Si, Ge, CdTe, GaAs, $PbI_2$, $HgI_2$, CZT or HgCdTe (also known as CTM), Cherenkov radiators such as $PbF_2$, $NaBi\,(WO_4)_2$, PbWO4, $MgF_2$, $C_6F_{14}$, $C_4F_{10}$, or silica aerogel. Scintillator elements, such as organic or inorganic crystal scintillators, liquid scintillators or gas scintillators can also be used. Scintillators can produce a detection signal which is due both to scintillation processes and to Cherenkov radiation processes.

Organic crystal scintillators can be, for example, anthracene, stilbene, naphthalene, liquid scintillators (for example, organic liquids such as p-terphenyl ($C_{18}H_{14}$), 2-(4-biphenylyl)-5-phenyl-1,3,4-oxadiazole PBD ($C_{20}H_{14}N_2O$), butyl PBD ($C_{24}H_{22}N_2O$), PPO ($C_{15}H_{11}NO$), dissolved in solvents such as toluene, xylene, benzene, phenylcyclohexane, triethylbenzene or decalin), gas scintillators (such as nitrogen, helium, argon, krypton, xenon), inorganic crystal scintillators, or combinations of any of the foregoing.

The commonly known inorganic scintillation crystals can also be used, for example, cesium iodide (CsI), thallium doped cesium iodide (CsI (TI)), bismuth germanate (BGO), thallium doped sodium iodide (NaI (TI)), barium fluoride ($BaF_2$), europium doped calcium fluoride ($CaF_2(Eu)$), cadmium tungstate ($CdWO_4$), cerium doped lanthanum bromide (LaBr3(Ce)), cerium doped lutetium-yttrium silicates (LuYSiOs(Ce)(YAG (Ce)), silver doped zinc sulfide (ZnS(Ag)), or cerium doped yttrium-aluminum garnet (III) $Y_3Al_5O_{12}$ (Ce) or LYSO. Additional examples are CsF, KI(TI), $CaF_2(Eu)$, $Gd_2SiO_5[Ce]$ (GSO), LSO.

As mentioned above, the scintillators according to the present invention can be monolithic crystals or pixelated crystals, or any combination thereof. Preferably, the scintillator, however, will be a single crystal (monolithic block), given that pixelated crystals introduce more dead areas into the gamma ray detector, therefore providing less sensitivity to the detector device compared with single crystals.

The device for detection (of scintillating photons) can be formed, for example, by photosensors. The photosensors can be matrices of silicon photomultipliers (SiPM), single-photon avalanche diodes (SPAD), digital SiPMs, avalanche photodiodes, position-sensitive photomultipliers, photomultipliers, phototransistors, photodiodes, photo-ICs, or combinations thereof. This means that a detector device can be coupled, for example, to a matrix of SiPM and another detector device can be coupled to a matrix of phototransistors in a detection system according to the preceding definitions.

The information extracted from the detector can be a spatial and/or temporal 2D data matrix. However, the method can be trivially generalized to any dimension, depending on the readout format.

A single solo detector can produce one or more data matrices. For example, if an acquisition device is used for different regions of the detector, a number of data matrices equal to or greater than the number of said regions can be obtained. Furthermore, the readouts of the acquisition device can also be combined to create a single data matrix. Another example can be a large detector using two acquisition devices in a single region. The combination of the two readout matrices can form a unified data matrix, if desired.

Alternatively or complementarily, a plurality of detectors can provide a single data matrix. For example, if a detector is not large enough to cover a desired surface, two or more detectors can be arranged in a matrix, and the readouts thereof can be combined to obtain a larger data matrix. The data matrix can be expressed using any desired coordinate system (cartesian, cylindrical, spherical, etc.).

Regardless of the dimension number or the coordinate system of the data matrix, the method used by the invention to obtain the coordinates of the impact position is the same. For example, in a D-dimensional data matrix with discrete or continuous values (and D ≥ 1, with D being an integer) as functions of D (D≥1) spatial dimensions. Generally, the method to be performed comprises the following steps:

a) Calculating the center of mass of the load and/or the center of mass of the distribution $q^M_i/t^N_i$, where M and N represent two real numbers, powers of $q_i$ and respectively of $t_i$.

b) Calculating the inertia tensor with respect to the center of mass of the load and/or the center of mass of the distribution $q^M_i/t^N_i$.

c) Diagonalizing the matrix corresponding to the inertia tensor in order to extract its eigenvectors. These vectors provide the axes of symmetry of the data matrix *N*-dimensional.

Any other method that extracts the axes of symmetry of the data matrix is also valid and would be comprised in the scope of the invention. An alternative example could be the use of automatic learning techniques, as occurs in neural network techniques.

There are several ways to obtain the coordinates if there are several interaction clouds. As an example, data from the data matrix can be projected along the axes defined by the eigenvectors of the inertia tensor, and these projections can be fitted to a known function or a (linear or non-linear) combination of functions. In the case of a 2D matrix, for a scintillation detector, these projections can be fitted to a linear combination of Gaussian functions.

**Claims**

1. A method for the detection of gamma rays with the capacity to determine multiple interactions and the corresponding time sequence thereof, comprising the use of a device in turn comprising:

   - one or more detection means for detecting the energy load $q_i$ deposited on the coordinates (x, y, z) of a detecting element and the time instant $t_i$ corresponding to the detection of said deposition;
   - electronic data reading and acquisition means connected to the detection means of the device, said electronic means being configured for capturing, digitizing, and transmitting the detection signals of the device;
   - at least one processing unit connected to the electronic means, configured with software and/or hardware means for recording and/or processing data generated by the electronic data reading and acquisition means; and said method being **characterized in that** it comprises performing the following steps:
   - calculating the center of mass of the deposited loads $q_i$ with respect to the coordinates (x, y, z) of the detecting element;
   - calculating the inertia tensor $I^{CM}_{\alpha\beta}$ with respect to the center of mass of the load $q_i$;
   - diagonalizing the matrix corresponding to the inertia tensor in order to extract its eigenvectors, determining the axes of symmetry of said matrix;
   - projecting the detected values of the load $q_i$ onto the axes defined by the eigenvectors;
   - determining the number of interactions experienced by each gamma ray in the detection device and the corresponding coordinates (x, y, z) and times $t_i$ thereof from the projection of the loads $q_i$ calculated in the preceding step, identifying an interaction with a maximum in the function of said projection;
   - establishing the time sequence of the interactions experienced by each gamma ray from the coordinates (x, y, z) of said interactions, from the detection times $t_i$, and from the determination of the speed of the gamma rays and/or of the optical photons propagated in the detecting element, from the speed of light in a vacuum c and from the refractive index n, and/or statistically based on the coordinates of the different interactions.

2. The method according to the preceding claim, wherein in the steps corresponding to the calculation of the center of mass and to the projection of the values of the load $q_i$, said values are divided by their corresponding time instant $t_i$ in the form of $q^M_i/t^N_i$, where M and N are two real numbers.

3. The method according to any of the preceding claims, wherein the projection of the loads $q_i$ is fitted numerically to a mathematical function, the coordinates (x, y, z) and/or the corresponding deposited energy being estimated from the properties of said function.

4. The method according to the preceding claim, wherein the mathematical function is a Gaussian distribution.

5. The method according to any of the preceding claims, further comprising the determination of the depth of interaction of the gamma rays from the scattering of the distribution of the energy load $q_i$ in the obtained projections on the eigenvector axes.

6. A detection device comprising:

   - one or more detection means for detecting the energy load $q_i$ deposited on the coordinates (x, y, z) of a detecting element and the time instant $t_i$ corresponding to the detection of said deposition;
   - electronic data reading and acquisition means connected to the detection means of the device, said electronic means being configured for capturing, digitizing, and transmitting the detection signals of the device;
   - at least one processing unit connected to the electronic means;
   said device being **characterized in that** the processing unit comprises software and/or hardware means for recording and/or processing data generated by the electronic data reading and acquisition means configured for performing a method according to any of the preceding claims.

7. The device according to the preceding claim, wherein the gamma ray detecting element comprises one or more pixelated or monolithic scintillators, one or more solid-state detectors or one or more Cherenkov radiation detectors, alone or in combination with one another.

8. The device according to the preceding claim, wherein the solid-state detecting element comprises If, Ge, CdTe, GaAs, $PbI_2$, $HgI_2$, CZT, or HgCdTe semiconductors, and/or wherein the Cherenkov detectors comprise $PbF_2$, NaBi $(WO_4)_2$, PbWO4, $MgF_2$, $C_6F_{14}$, $C_4F_{10}$, or silica aerogel.

9. The device according to claim 7, wherein the scintillator elements comprise organic or inorganic crystal scintillators, liquid scintillators, and/or gaseous scintillators.

10. The device according to the preceding claim, wherein:

    - the organic crystal scintillators comprise anthracene, stilbene, and/or naphthalene;
    - the inorganic crystal scintillators comprise cesium iodide (CsI), thallium doped cesium iodide (CsI (TI)), bismuth germanate (BGO), thallium doped sodium iodide (NaI (TI)), barium fluoride ($BaF_2$), europium doped calcium fluoride ($CaF_2$(Eu)), cadmium tungstate ($CdWO_4$), cerium doped lanthanum bromide (LaBr3(Ce)), cerium doped lutetium-yttrium silicates (LuYSiOs(Ce)(YAG) (Ce)), silver doped zinc sulfide (ZnS(Ag)), or cerium doped yttrium-aluminum garnet (III) $Y_3Al_5O_{12}$ (Ce), LYSO, CsF, KI(TI), $CaF_2$(Eu), $Gd_2SiO_5$[Ce] (GSO), and/or LSO;
    - the liquid scintillators comprise p-terphenyl ($C_{18}H_{14}$), 2-(4-biphenylyl)-5-phenyl-1,3,4-oxadiazole PBD ($C_{20}H_{14}N_{2O}$), butyl PBD ($C_{24}H_{22}N_{2O}$), PPO ($C_{15}H_{11}NO$), dissolved in solvents such as toluene, xylene, benzene, phenylcyclohexane, triethylbenzene, or decalin;
    - the gaseous scintillators comprise nitrogen, helium, argon, krypton, and/or xenon.

11. The device according to any of claims 6-10, wherein the detecting element comprises one or more photodetectors.

12. The device according to the preceding claim, wherein the photosensors comprise matrices of silicon photomultipliers (SiPMs), single-photon avalanche diodes (SPAD), digital SiPMs, avalanche photodiodes, position-sensitive photomultipliers, photomultipliers, phototransistors, photodiodes, photo-ICs, or combinations thereof.

13. The device according to any of claims 6-12, wherein the gamma ray detecting element is coupled to one or more optically reflective surfaces, said surfaces being polished or rough, specular, diffuse, retro-reflective, or a combination thereof.

14. Use of a device according to any of claims 6-13 or of a method according to any of claims 1-5, in a nuclear imaging medical device and/or in a gamma ray telescope.

FIG. 1

FIG. 2a

FIG. 2b

FIG. 3a

FIG. 3b

**FIG. 4a**

**FIG. 4b**

**FIG. 4c**

**FIG. 5**

**FIG. 6**

**FIG. 7**

FIG. 8

FIG. 9

FIG. 10

## INTERNATIONAL SEARCH REPORT

| International application No. |
| --- |
| PCT/ES2020/070181 |

**A. CLASSIFICATION OF SUBJECT MATTER**

*G01T1/24* (2006.01)

According to International Patent Classification (IPC) or to both national classification and IPC

**B. FIELDS SEARCHED**

Minimum documentation searched (classification system followed by classification symbols)
G01T

Documentation searched other than minimum documentation to the extent that such documents are included in the fields searched

Electronic data base consulted during the international search (name of data base and, where practicable, search terms used)

EPODOC, INVENES, WPI, NPL, XPESP, XPAIP, XPI3E, INSPEC

**C. DOCUMENTS CONSIDERED TO BE RELEVANT**

| Category* | Citation of document, with indication, where appropriate, of the relevant passages | Relevant to claim No. |
| --- | --- | --- |
| A | US 2018289349 A1 (SANDERS JAMES C ET AL.) 11/10/2018, paragraphs [0007] to [0064]; figures 1-9. | 1-14 |
| A | HOLUPKA E J et al.. Automatic detection of linear artifacts in medical images. Medical Physics, 20040901 Aip, Melville, Ny, Us., 01/09/2004, Vol. 31, N° 9, pages 2707 - 2710, XP012075042, ISSN 0094-2405, <DOI: 10.1118/1.1783553> | 1-14 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
| --- | --- |
| 01/07/2020 | **(09/07/2020)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>J. Botella Maldonado<br><br>Telephone No. 91 3495382 |

Form PCT/ISA/210 (second sheet) (January 2015)

## INTERNATIONAL SEARCH REPORT

Information on patent family members

International application No.

PCT/ES2020/070181

| Patent document cited in the search report | Publication date | Patent family member(s) | Publication date |
|---|---|---|---|
| US2018289349 A1 | 11.10.2018 | US10292671 B2 | 21.05.2019 |
| | | EP3291734 A1 | 14.03.2018 |
| | | EP3291734 B1 | 18.12.2019 |
| | | WO2016178115 A1 | 10.11.2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016185123 A1

- WO 2017077164 A1